# EUROPEAN PATENT APPLICATION

(11) **EP 1 594 214 A1**
(43) Date of publication of application: **09.11.2005**
(21) Application number: 03768196.2
(22) Date of filing: 25.12.2003
(51) Int. Cl.: H02K 33/18

(54) **DRIVING UNIT**

(30) Priority: 26.12.2002 JP 2002376538
(71) Applicant: IAI Corporation, Shimizu-shi, Shizuoka 424-0102 (JP)
(72) Inventor: FUJINAGA, teruaki, IAI CORPORATION, Shizuoka-shi, Shizuoka 424-0102 (JP)
(74) Representative: Grünecker, Kinkeldey, Stockmair & Schwanhäusser Anwaltssozietät
(86) International application number: PCT/JP2003/016657
(87) International publication number: WO 2004/059821

(57) **Abstract**

A driving unit comprising a fixed part, a moving part provided movably to the fixed part, a permanent magnet mounted on either one of the fixed part and the moving part, and a coil mounted on the other one of the fixed part and the moving part and facing the permanent magnet, characterized in that neither another permanent magnet nor a high magnetic permeable material is arranged on the other side of the coil facing the above-mentioned permanent magnet.

## Description

### TECHNICAL FIELD

The present invention relates to a driving unit. In particular, the present invention relates to the driving unit using permanent magnet and coil, in which neither another permanent magnet nor a high magnetic permeable material is arranged on the other side of the coil facing the permanent magnet, whereby the driving unit may have the smaller thickness and the longer stroke.

### BACKGROUND ART

There are several known precision positioning devices, such as those using ball screw and ball nut structure. This type of precision positioning device uses a ball bearing serving as a linear guide, and a servo motor rotates and drives a ball screw, whereby a ball nut engaged with the ball screw is moved in order to perform the positioning. However, according to this ball screw and ball nut structure, because of mechanical friction between the linear guide and the ball screw, it is difficult to carry out high precision positioning in which smaller than submicron order is required.

Thus, for the purpose of such a high precision positioning, there has been provided a driving structure, using a contact-free floating guide by air or magnetism, and also using an electromagnetic linear motor capable of contact-free driving. This structure has already been used, such as in semiconductor manufacturing apparatus, but this apparatus is very expensive (e.g. Japanese Unexamined Patent Publication No. Hei 11-186156, Japanese Unexamined Patent Publication No. Hei 08-037772 and Japanese Unexamined Patent Publication No. Hei 05-111844).

Also, the inventor of the present invention also provided several contact-free guides using small-sized ultrasonic levitation device (e.g. Japanese Patent Application No. 2002-65366).

According to the driving structure using electromagnetic linear motor as discussed above, there are some advantageous points, such as that the driving without any mechanical contact can be done, and that the high precision positioning can be carried out. However, there are also some problems, such as that the structure comprising electromagnetic coil and permanent magnet is complicated, and that the high precision positioning cannot be done easily because of thrust ripple due to uneven magnetic field distribution.

For the purpose of solving the above problems, there has been provided a driving structure using voice coil motor (single-layer type linear motor) (e.g. Hitoshi HASHIZUME, Hidenori SHINNO, JSME (Japan Society of Mechanical Engineers) Journal, Series C, Vol. 67-661, pp. 273-279).

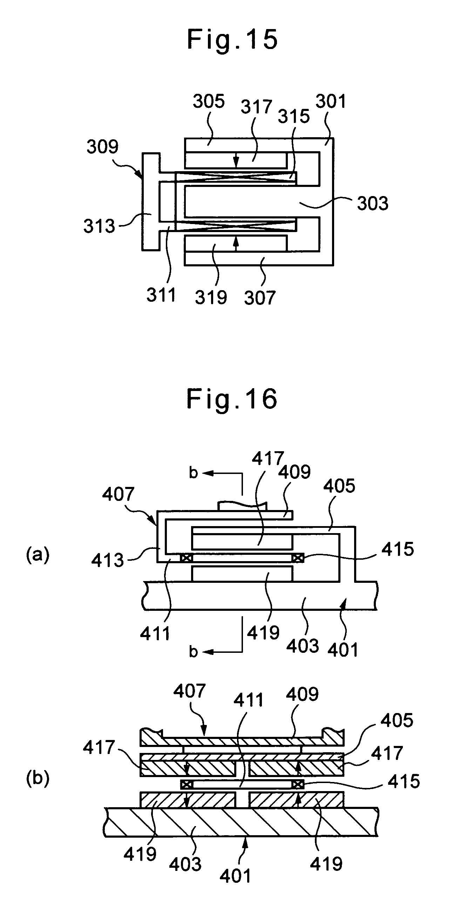

The structure thereof will be discussed with reference to Fig. 15. Fig. 15 illustrates a voice coil motor, having a yoke 301 made from high magnetic permeability material such as iron. The yoke 301 is in the shape of letter E, comprising a center protrusion 303, and a pair of side walls 305, 307. There is also a moving part 309, comprising a hollow pillar 311 and an end part 313. The center protrusion 303 of the yoke 301 is surrounded by the hollow pillar 311, and the hollow pillar 311 is movable, in the left and right directions of Fig, 15, along the center protrusion 303.

There is a coil 315 wound around the outer periphery of the hollow pillar 311. There are permanent magnets 317, 319, respectively provided in the inside of the pair of side walls 305, 307. As illustrated by arrows of Fig. 15, the pair of permanent magnets 317, 319 has been magnetized in the opposite direction to each other. With this structure, a magnetic flux current is provided, starting from the pair of permanent magnets 317, 319, respectively, toward the center protrusion 303 of the yoke 301, and returning to the pair of permanent magnets 317, 319 via the yoke 301.

According to the structure as discussed above, because of the interactions between the magnetic flux current and the electric current, i.e. the magnetic flux current starting from the pair of permanent magnets 317, 319, respectively, toward the center protrusion 303 of the yoke 301, and returning to the pair of permanent magnets 317, 319 via the yoke 301, and the electric current of coil 315, the driving force in the lateral direction of Fig. 15 is given to the moving part 15 according to Fleming's Left-hand Law.

There has also been provided a voice coil motor as illustrated in Fig. 16, of which thickness is smaller than that of Fig. 15. Fig. 16 (a) is a front view of the voice coil motor, Fig. 16 (b) is a sectional view cut along the line b - b of Fig. 16 (a). There is a fixed part 401, comprising a base 403, and an extension 405 protrusively extending from the base 403. There is also a moving part 407, substantially in the shape of a letter U, comprising an upper panel 409, a lower panel 411 and a side wall 413.

The lower panel 411 has been inserted in the space between the base 403 and the extension 405 of the fixed part 401. There is a coil 415 wound around the lower panel 411. For reference, the winding direction of the coil 415 is different from that of the voice coil motor discussed before, by the angle of 90 degrees. There are permanent magnets 417, 417, 419, 419, respectively provided on the inner surfaces of the base 403 and the extension 405 of the fixed part 401.

With this structure, when an appropriate electric current is applied to the coil 415, likewise the case of the voice coil motor of Fig. 15, the driving force in the lateral direction of Fig. 16 (b) is given to the moving part 407 according to Fleming's Left-hand Law.

Accordingly, because the coil 415 has been wound in the horizontal direction, the thickness of the device may become smaller (e.g. Japanese Unexamined Patent Publication No. 2000-136092).

However, the voice coil motors discussed as above have the following problems.

First, in the case of the voice coil motor of Fig. 15, as compared with conventional electromagnetic linear motor, there are in fact several advantageous points, such as that relatively simple structure may be provided because of using only a single coil, and that there is no thrust ripple, but there is also a difficulty in reducing the thickness of the device.

Second, in the case of the voice coil motor of Fig. 16, because of winding the coil 415 in the horizontal direction, the thickness of the device may become smaller. However, the reduction of thickness is still not sufficient, and there have been demands of smaller thickness. Further, in the case of the voice coil motor of Fig. 16, because of complicated structure of the fixed part 401 and the moving part 407, the overall structure may also become complicated. In addition, because the length of stroke depends of the size of the coil, the length of stroke would be limited, and it is difficult to provide longer stroke.

In the light of the above problems, it is an object of the present invention to provide a driving unit having the smaller thickness and the longer stroke.

### DISCLOSURE OF INVENTION

To achieve the objects mentioned above, according to claim 1 of the present invention, there is provided a driving unit comprising, a fixed part; a moving part provided movably to the fixed part; a permanent magnet mounted on either one of the fixed part and the moving part; and a coil mounted on the other one of the fixed part and the moving part and facing the permanent magnet, wherein neither another permanent magnet nor a high magnetic permeable material is arranged on the other side of the coil facing the above-mentioned permanent magnet.

According to claim 2 of the present invention, there is provided the driving unit as claimed in claim 1, wherein the coil is wound in the direction parallel to a surface of the permanent magnet.

According to claim 3 of the present invention, there is provided the driving unit as claimed in claim 1, wherein the coil is wound in the direction perpendicular to a surface of the permanent magnet.

According to claim 4 of the present invention, there is provided the driving unit as claimed in claim 3, wherein a high magnetic permeable material is arranged in a hollow core of the coil.

According to claim 5 of the present invention, there is provided the driving unit as claimed in claim 4, wherein the high magnetic permeable material is arranged to be elongating in the moving direction of the moving part.

According to claim 6 of the present invention, there is provided the driving unit as claimed in any one claim of claims 1 to 5, wherein the moving part is guided against the fixed part by a contact-free guide mechanism.

According to claim 7 of the present invention, there is provided the driving unit as claimed in claim 6, wherein the contact-free guide mechanism is an ultrasonic levitation mechanism.

According to claim 8 of the present invention, there is provided the driving unit as claimed in any one claim of claims 1 to 7, wherein the coil is mounted on the fixed part.

According to claim 9 of the present invention, there is provided the driving unit as claimed in any one claim of claims 1 to 8, wherein the moving part moves in one direction against the fixed part.

According to claim 10 of the present invention, there is provided the driving unit as claimed in any one claim of claims 1 to 8, wherein the moving part or the fixed part is intermittently provided with a plurality of coils including non-parallel coil arrangement, and the moving part moves in the X axis - Y axis two dimensional directions against the fixed part.

According to claim 11 of the present invention, there is provided the driving unit as claimed in any one claim of claims 1 to 8, wherein the moving part or the fixed part is intermittently provided with a plurality of coils including non-parallel coil arrangement, and the moving part moves in the X axis - Y axis two dimensional directions, and also rotates, against the fixed part.

Therefore, according to the driving unit of the present invention, there is the fixed part, the moving part provided movably to the fixed part, the permanent magnet mounted on either one of the fixed part and the moving part, and the coil mounted on the other one of the fixed part and the moving part and facing the above-mentioned permanent magnet. The driving unit is characterized in that neither another permanent magnet nor a high magnetic permeable material is arranged on the other side of the coil facing the above-mentioned permanent magnet, whereby the thickness of the unit may be reduced.

Preferably, the coil may be wound in the direction parallel to the surface of the permanent magnet. In this case, although the length of stroke length may be limited, it is possible to secure sufficient thrust.

Preferably, the coil may also be wound in the direction perpendicular to the surface of the permanent magnet. In this case, the length of stroke will not be limited, thus it is possible to elongate the stroke by elongating the length of permanent magnet.

Preferably, the high magnetic permeable material may be arranged in the hollow core of the coil. Thus, it is possible to increase the thrust.

Preferably, the moving part may be guided against the fixed part by the contact-free guide mechanism. The contact-free guide mechanism may be the ultrasonic levitation mechanism. Where the contact-free guide mechanism is applied, the positioning accuracy may be improved, and among others, where the ultrasonic levitation mechanism is applied, the size of the unit may be minimized.

Preferably, the coil may be mounted on the fixed part. In this case, the good cooling effect may be expected by heat conduction via the fixed part, whereby it is possible to prevent deterioration of positioning accuracy due to thermal expansion or thermal deformation.

As a most general example, the moving part may move in one direction against the fixed part. Further, the moving part or the fixed part may be intermittently provided with the plurality of coils including non-parallel coil arrangement, so that the moving part may move in the X axis - Y axis two dimensional directions against the fixed part.

Further, according to the substantially same structure, the moving part may also rotate, in addition to the movement in the X axis - Y axis two dimensional directions against the fixed part.

### BRIEF DESCRIPTION OF DRAWINGS

Figure 1 are views showing a structure of a first embodiment of the present invention, wherein Fig. 1 (a) is a plan view of a driving unit, Fig. 1 (b) is a front view of the driving unit, and Fig. 1 (c) is a sectional view cut along the line c - c of Fig. 1 (a);
Figure 2 are views showing the structure of the first embodiment of the present invention, wherein Fig. 2 (a) is a partial side view of the driving unit, and Fig. 2 (b) is a sectional view cut along the line b - b of Fig. 2 (a);
Figure 3 is a graphic chart showing relation between the distance from the surface of the permanent magnet and the magnetic flux density according to the first embodiment of the present invention;
Figure 4 are views showing a structure of a second embodiment of the present invention, wherein Fig. 4 (a) is a plan view of a driving unit, Fig. 4 (b) is a front view of the driving unit, and Fig. 4 (c) is a sectional view cut along the line c - c of Fig. 4 (a);
Figure 5 are views showing the structure of the second embodiment of the present invention, wherein Fig. 5 (a) is a partial side view of the driving unit, and Fig. 5 (b) is a sectional view cut along the line b - b of Fig. 5 (a);
Figure 6 are views showing a structure of a third embodiment of the present invention, wherein Fig. 6 (a) is a partial side view of a driving unit, and Fig. 6 (b) is a sectional view cut along the line b - b of Fig. 6 (a);
Figure 7 is a graphic chart showing relation between the distance from the surface of the permanent magnet and the magnetic flux density according to the third embodiment of the present invention;
Figure 8 are views showing a structure of a fourth embodiment of the present invention, wherein Fig. 8 (a) is a plan view of a driving unit, Fig. 8 (b) is a front view of the driving unit, and Fig. 8 (c) is a sectional view cut along the line c - c of Fig. 8 (a);
Figure 9 are views showing the structure of the fourth embodiment of the present invention, wherein Fig. 9 (a) is a partial side view of the driving unit, and Fig. 9 (b) is a sectional view cut along the line b - b of Fig. 9 (a);
Figure 10 are views showing a structure of a fifth embodiment of the present invention, wherein Fig. 10 (a) is a partial plan view of a driving unit, and Fig. 10 (b) is a sectional view cut along the line b - b of Fig. 10 (a);
Figure 11 are views showing a structure of a sixth embodiment of the present invention, wherein Fig. 11 (a) is a partial plan view of a driving unit, and Fig. 11 (b) is a sectional view cut along the line b - b of Fig. 11 (a);
Figure 12 are views showing a structure of a seventh embodiment of the present invention, wherein Fig. 12 (a) is a partial sectional view of a driving unit, and Fig. 12 (b) is another sectional view cut along the line b - b of Fig. 12 (a);
Figure 13 are views showing a structure of an eighth embodiment of the present invention, wherein Fig. 13 (a) is a partial plan view of a driving unit, and Fig. 13 (b) is a sectional view cut along the line b - b of Fig. 13 (a);
Figure 14 are views showing a structure of a ninth embodiment of the present invention, wherein Fig. 14 (a) is a partial plan view of a driving unit, and Fig. 14 (b) is a sectional view cut along the line b - b of Fig. 14 (a);
Figure 15 is a side sectional view of a voice coil motor according to a prior art; and
Figure 16 are views showing a structure of another prior art, wherein Fig. 16 (a) is a side view of a voice coil motor, and Fig. 16 (b) is a sectional view cut along the line b - b of Fig. 16 (a).

### BEST MODE FOR CARRYING OUT THE INVENTION

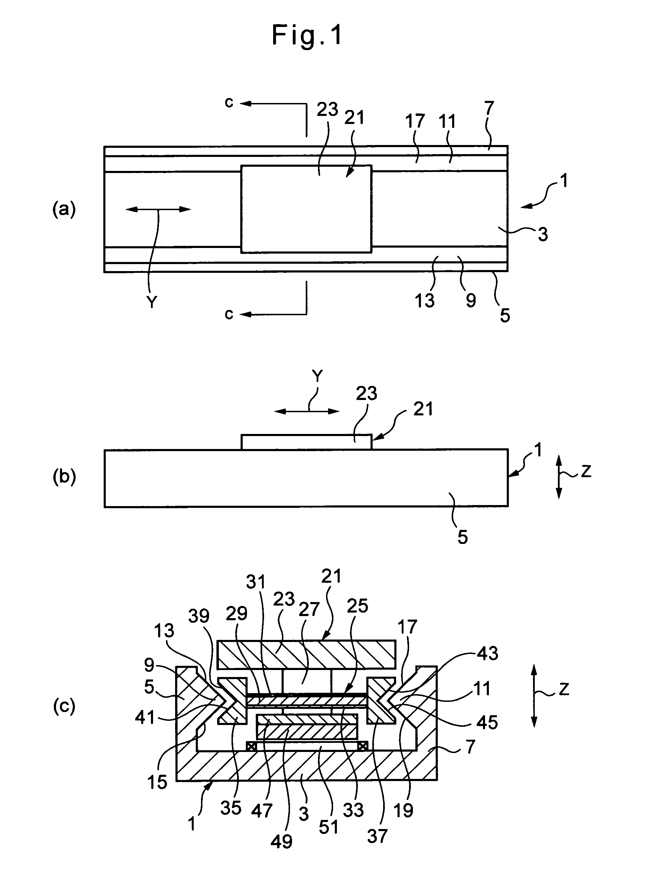

A first embodiment of the present invention will be explained with reference to Figs. 1 through 3. Fig. 1 are views showing a structure of the present embodiment, wherein Fig. 1 (a) is a plan view of a driving unit, Fig. 1 (b) is a front view of the driving unit, and Fig. 1 (c) is a sectional view cut along the line c - c of Fig. 1 (a).

There is a fixed part 1 substantially in the shape of a letter U, comprising a bottom wall 3, a left side wall 5 and a right side wall 7. A left guide member 9 and a right guide member 11 are provided, respectively protruding sharply from the inside of the left guide member 5 and the right guide member 7.

The left guide member 9 has an upper sloped surface 13 and a lower sloped surface 15, providing an inwardly protruding portion formed between the upper sloped surface 13 and the lower sloped surface 15. Similarly, the right guide member 11 also has an upper sloped surface 17 and a lower sloped surface 19, providing another inwardly protruding portion formed between the upper sloped surface 17 and the lower sloped surface 19.

There is a moving part 21 to be floatable in Z axis direction of Fig. 1 (b) and Fig. 1 (c), and also to be movable in Y axis direction of Fig. 1 (a) and Fig. 1 (b), incorporated and positioned in the inside of the fixed part 1. The moving part 21 chiefly comprises a moving part body 23, a vibration device 25 and a pillar 27. The vibration device 25 comprises, a vibration plate 29, and electrode parts 31, 33 respectively attached to the upper and lower surfaces of the vibration plate 29. The vibration plate 29 itself comprises a piezoelectric material. The vibration device 25 has a left guide member 35 and a right guide member 37, corresponding to the left guide member 9 and the right guide member 11 of the fixed part 1 as discussed above. The left guide member 35 has an upper sloped surface 39 and a lower sloped surface 41, forming a sharp protrusion. Similarly, the right guide member 37 also has an upper sloped surface 43 and a lower sloped surface 45, forming a sharp protrusion.

When the vibration device 25 makes ultrasonic vibration, as illustrated in Fig. 1 (c), the moving part 21 is floated in Z axis direction and becomes a contact-free state.

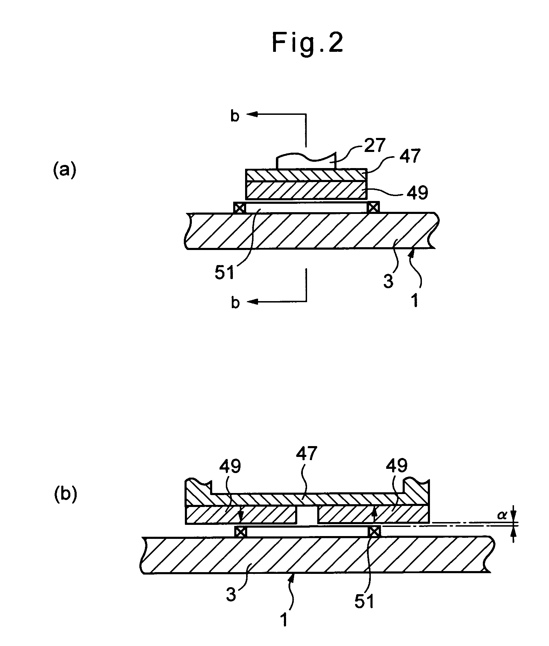

There is a plate 47 attached to the bottom of the pillar 27, and as illustrated in Fig. 2 (b), there are permanent magnets 49, 49 attached to the bottom of the plate 47. On the other hand, there is a coil 51 provided on the inner surface of the bottom wall 3 of the fixed part 1 as discussed above. The coil 51 is wound in the direction parallel to the permanent magnets 49, 49 as shown in Fig. 2 (b), i.e. in the horizontal direction. Thus, the permanent magnets 49, 49, and the coil 51, generate the driving force to move the moving part 21 in the lateral direction of Fig. 1 (a) and Fig. 1 (b), i.e. in Y axis direction.

As illustrated in Fig. 2 (b), the permanent magnets 49, 49 have been respectively magnetized in the opposite direction to each other. This is because, with reference to Fig. 2 (b), the directions of electric current at the left end part and the right end part of the coil 51 are opposite to each other. Consequently, when the direction of thrust according to Fleming's Left-hand Law should be coincided, it is necessary to arrange the pair of permanent magnets 49, 49, and in addition, the direction of magnetic flux generated by each of the permanent magnets 49, 49 must be opposite to each other. In this case, with reference to Fig. 2 (b), the left end part of the coil 51 does not move to the permanent magnet 49 on the right side, and consequently, the length of stroke is a half of the width of the coil 51 in the moving direction thereof. Further, according to the present embodiment, the space (α) between the coil 51 and the permanent magnets 49, 49, has been set to 1 mm.

The function of the present embodiment will now be explained with reference to the structure as discussed above.

When the ultrasonic vibration is generated by the vibration device 25, the floating force is applied to the moving part 21, whereby the moving part 21 becomes a floating state in Z axis direction against the fixed part 1, i.e. a contact-free state, as illustrated in Fig. 1 (c).

In such a state, when an electric current in an appropriate direction is applied to the coil 51, according to Fleming's Left-hand Law, the driving force is applied to the moving part 21, to move in any of Y axis directions. Thus, the moving part 21 moves in any ofY axis directions.

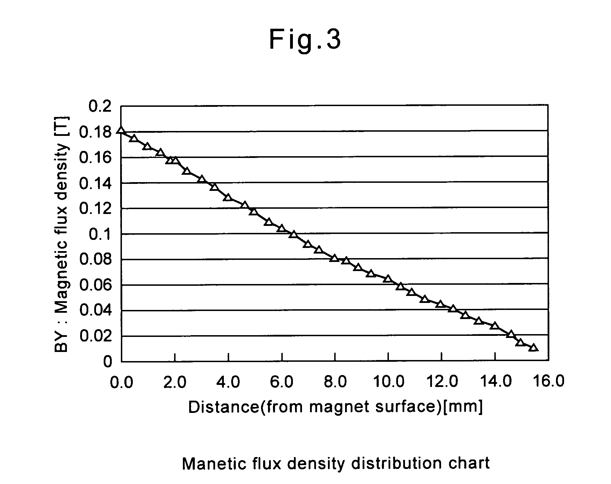

According to the present embodiment, there is neither another permanent magnet nor a high magnetic permeable material on the other side of the coil facing the permanent magnet 49, and this structure is absolutely different from prior arts. However, there may be concerns whether the required magnetic flux density could be obtained. This point will be explained with reference to Fig. 3.

Fig. 3 shows a relation between the distance from the permanent magnet (the lateral axis) and the magnetic flux density (the longitudinal axis). As is clear from this chart, the longer the distance from the permanent magnet becomes, the smaller the magnetic flux density becomes. However, where the distance is short, e.g. about 2 mm, the attenuation of the magnetic flux density is around 10 % at most. Therefore, when the coil 51 is positioned close to the permanent magnet 49 (as discussed above, according to the present embodiment, the distance has been set to be 1 mm), even where there is neither another permanent magnet nor a high magnetic permeable material at the back of the coil 51, it is possible to secure a required magnetic flux density.

The present embodiment has the following merits.

First, it is possible to reduce the height (thickness) of the device, whereby the size of the device may be minimized. This is because, there is neither another permanent magnet nor a high magnetic permeable material on the other side of the coil 51 facing the permanent magnets 49, 49, and also because, the space (α) between the coil 51 and the permanent magnets 49, 49 has been set to a quite small value (according to the present embodiment, 1 mm).

Second, according to the present embodiment, the center of the permanent magnet 49 serves as the point of application of thrust. Thus, because the permanent magnet 49 has been positioned close to the center of gravity of the moving part 21, the motion of the moving part 21 may become stable, and for example, the accuracy of dynamic positioning such as pitching movement may be improved.

For example, in the case of the structure as illustrated in Fig. 16, the coil 415 serves as the point of application of thrust. However, because this position is apart from the center of gravity of the moving part 407, it is impossible to obtain such a merit as discussed above.

Further, according to the driving unit of the present embodiment, although the length of stroke is relatively small (e.g. about 30 mm), the thickness may become smaller, and it is possible to secure sufficient thrust.

In particular, where the contact-free guide is applied, because the moving part is contact-free, the cooling effect by heat conduction may not be expected. On the other hand, according to the present embodiment, the coil 51, serving as a heating element by Joule heat of electric current, has been attached to the fixed part 1. Thus, the good cooling effect may be obtained by heat conduction on the fixed part 1, whereby it is possible to prevent deterioration of positioning accuracy due to thermal expansion or thermal deformation. This is because the fixed part 1 itself has large thermal capacity, and because the fixed part 1 is fixed and in contact with other structural members. Accordingly, it is possible to expect good cooling effect by heat conduction.

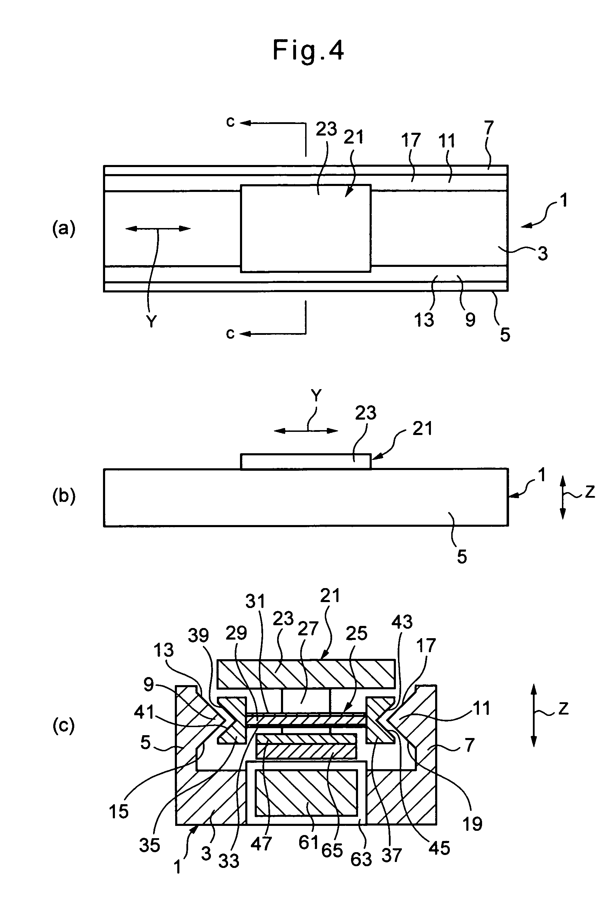

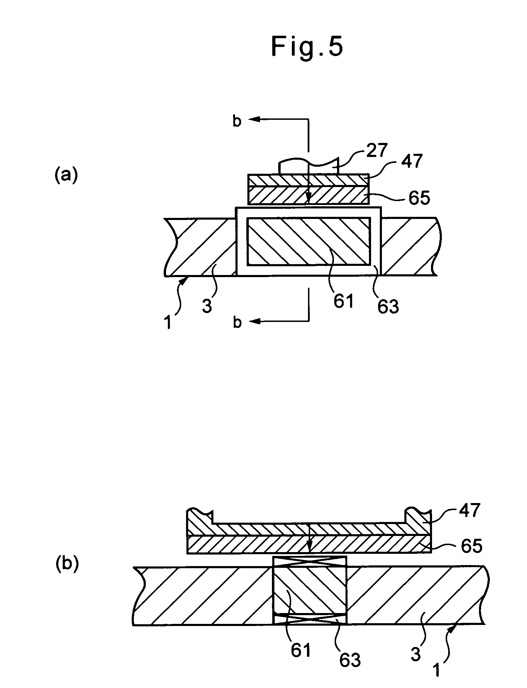

Now a second embodiment of the present invention will be explained with reference to Figs. 4 and 5. Although the first embodiment as discussed above has the structure of winding the coil 51 in the direction parallel to the permanent magnet 49, i.e. in the horizontal direction, according to the second embodiment, the coil has been wound in the perpendicular direction. The detailed structure thereof will be explained as below.

There is a coil winding part 61 in the bottom wall 3 of the fixed part 1, and a coil 63 is wound around the coil winding part 61. On the other hand, there is a permanent magnet 65 attached to the plate 47, which has been attached to the bottom of the pillar 27 of the moving part 21.

The other structure is substantially the same as that of the first embodiment as discussed above, and the identical numerals are allotted to the identical elements, and the explanation thereof will not be made.

According to the arrangement of the second embodiment, the direction of the magnetic flux in the upper end part of the coil 63 close to the permanent magnet 65, and the direction of the magnetic flux in the lower end part of the coil 63 away from the permanent magnet 65, are the same. On the other hand, the direction of the electric current in the upper end part of the coil 63, and the direction of the electric current in the lower end part of the coil 63, are opposite to each other. Thus, the direction of thrust in the upper end part of the coil 63, and the direction of thrust in the lower end part of the coil 63, both of which are generated by Fleming's Left-hand Law, are opposite to each other. Therefore, when the size of the magnetic flux in the upper end part is the same as that of the lower end part, each thrust is counteracted, whereby the thrust shall not be generated at all.

However, with reference to the graphic chart of Fig. 3 according to the first embodiment, the longer the distance from the permanent magnet 65 becomes, the smaller the magnetic flux density becomes. In other words, the magnetic flux density in the upper end part of the coil 63 is remarkably different from that in the lower end part of the coil 63. For example, as illustrated in Fig. 3, when the distance from the permanent magnet 65 is 10 mm, the magnetic flux density is attenuated to about one third thereof. Therefore, the thrust in the upper end part of the coil 63 is sufficiently large, and although this thrust would be somewhat attenuated by the thrust in the lower end part of the coil 63, as a whole, the thrust in the upper end part of the coil 63 is dominant, which may secure the required thrust.

The above structure as discussed above may serve substantially the same function as that of the first embodiment. In addition, because the direction of the magnetic flux of the permanent magnet 65 is always the same, where the length of the permanent magnet 65 is elongated, it is possible to elongate the length of stroke.

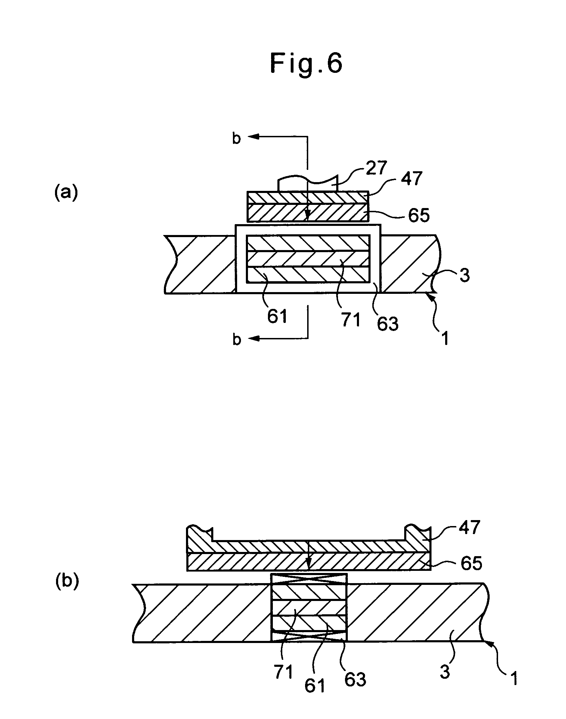

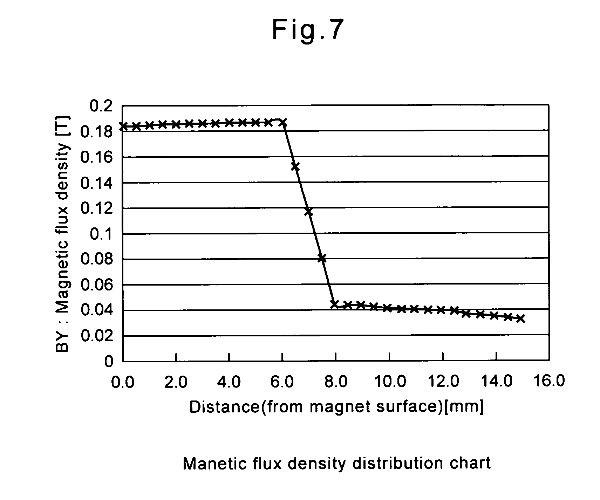

Now a third embodiment of the present invention will be explained with reference to Figs. 6 and 7. According to the third embodiment, with reference to the second embodiment, there is a magnetic flux isolation member 71 made of high magnetic permeable material (e.g. iron) interposed in the inside of the coil 63. Accordingly, the magnetic flux generated by the permanent magnet 65 above of the coil 63 is blocked, whereby the difference between the magnetic flux density in the upper end part of the coil 63 and that in the lower end part of the coil 63 may become larger, which may serve to enhance the thrust.

Fig. 7 shows how much the magnetic flux density may be attenuated by interposing the magnetic flux isolation member 71. According to Fig. 7, the lateral axis shows the distance from the surface of the permanent magnet 65, and the longitudinal axis shows the magnetic flux density, so that the relation to each other when interposing the magnetic flux isolation member 71 may be explained. With reference to Fig. 7, when the magnetic flux isolation member 71, made of soft iron at the thickness of 2 mm, was interposed at the position of 6 mm away from the permanent magnet 65, it was possible to attenuate the magnetic flux density to around 20 %.

Therefore, the present embodiment may serve substantially the same function as that of the second embodiment. In addition, because of the large difference between the magnetic flux density in the upper end part of the coil 63 and that in the lower end part of the coil 63, it was possible to obtain larger thrust.

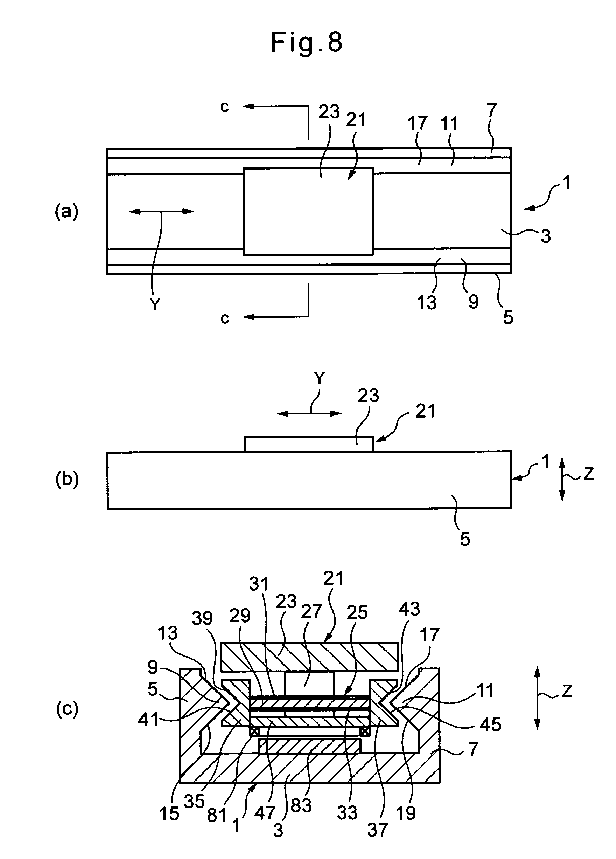

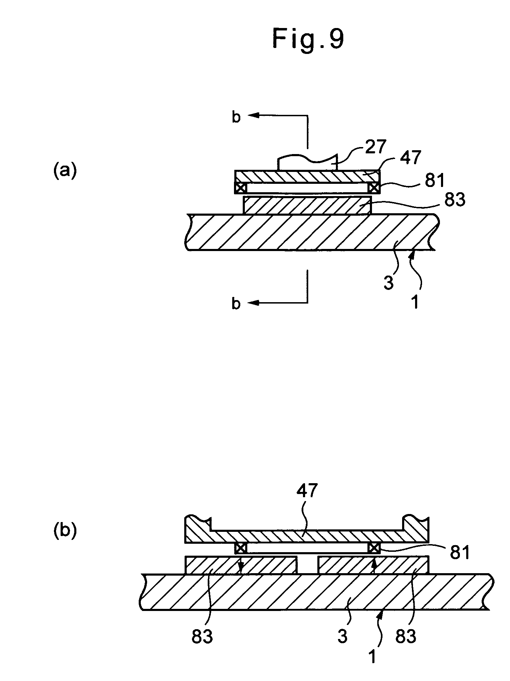

Now a fourth embodiment of the present invention will be explained with reference to Figs. 8 and 9. Although the first through third embodiments as discussed above have the structure, in which the coil is attached to the fixed part and the permanent magnets are attached to the moving part, it is also possible to attach the coil to the moving part and to attach the permanent magnets to the fixed part. This structure is shown in Figs. 8 and 9.

As illustrated in Fig. 8 (c) and Fig. 9, there is a coil 81 attached to the plate 47, and there are permanent magnets 83, 83 attached to the bottom wall 3 of the fixed part 1.

The other structure is substantially the same as that of the first embodiment as discussed above, and the identical numerals are allotted to the identical elements, and the explanation thereof will not be made.

The present embodiment may serve substantially the same function as that of the first through third embodiments.

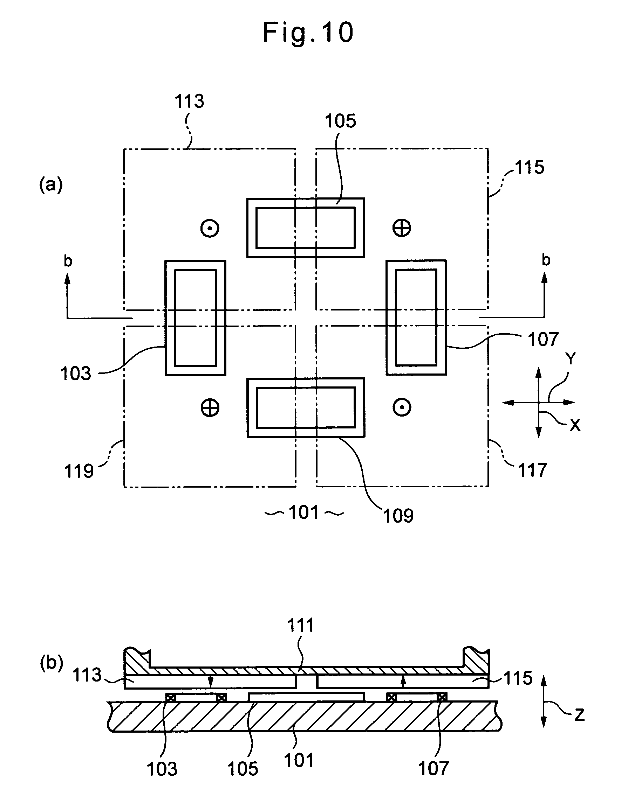

Now a fifth embodiment of the present invention will be explained with reference to Fig. 10. Although the first through fourth embodiments as discussed above have the structure of moving the moving part solely in Y axis direction, it is also possible to move the moving part in X axis - Y axis two dimensional directions.

As illustrated in Fig. 10, there are coils 103, 105, 107, 109 arranged at four positions of a fixed part 101. On the other hand, there are permanent magnets 113, 115, 117, 119 arranged at four positions of a moving part 111. With this structure, the moving part 111 may move in X axis - Y axis two dimensional directions.

With reference to Fig. 10, although the structure for contact-free levitation is not illustrated, it is possible, for example, to apply levitation system by ultrasonic vibration likewise the case of the first through fourth embodiments.

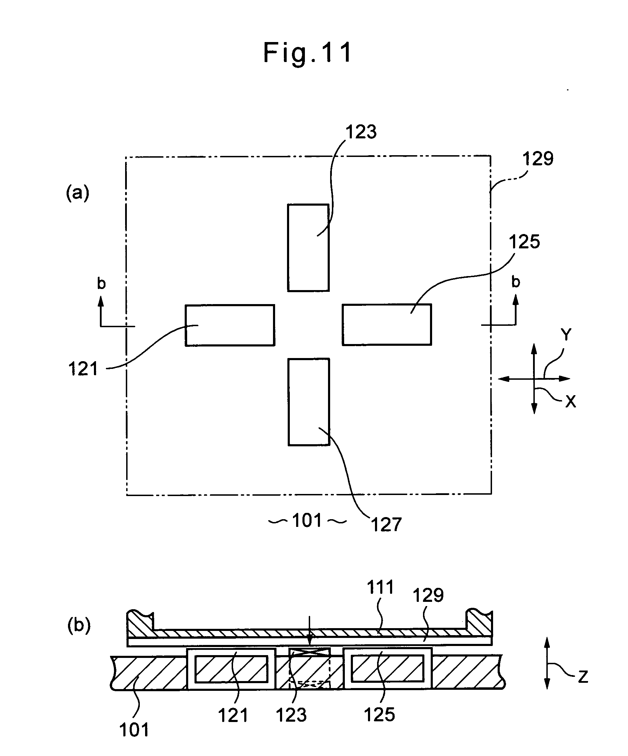

Now a sixth embodiment of the present invention will be explained with reference to Fig. 11. Although the fifth embodiment as discussed above has the structure of winding the coil in the horizontal direction, according to the sixth embodiment, the coil has been wound in the perpendicular direction. There are coils 121, 123, 125, 127, respectively wound in the perpendicular direction, arranged at four positions of the fixed part 101. On the other hand, there is a permanent magnet 129 provided on the moving part 111. With this structure, it is also possible to move the moving part 111 in X axis - Y axis two dimensional directions.

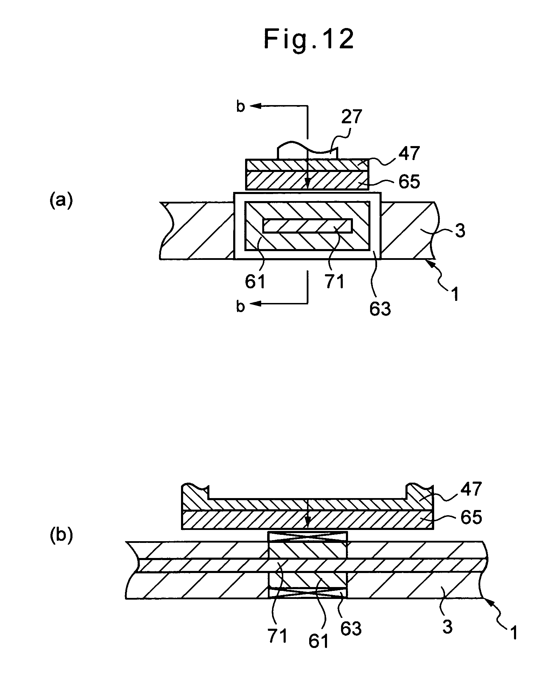

Now a seventh embodiment of the present invention will be explained with reference to Fig. 12. According to the seventh embodiment, the magnetic flux isolation member 71, explained in the third embodiment and made of high magnetic permeable material (e.g. iron), is positioned to be elongating in the driving direction as illustrated in Fig. 12 (b). Thus, because of the suction force against the permanent magnet 65, the dynamic rigidity of the moving part (slider) 21 is improved, whereby the moving stability may also be improved.

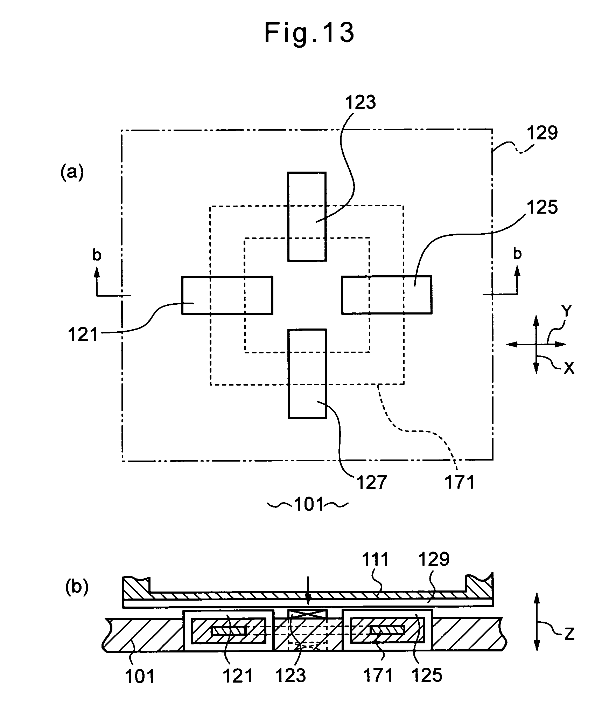

Now an eighth embodiment of the present invention will be explained with reference to Fig. 13. According to the eighth embodiment, with reference to the sixth embodiment, there is a magnetic flux isolation member 171 made of high magnetic permeable material (e.g. iron), arranged to be penetrating through the inside of the coils 121, 123, 125, 127. Thus, likewise the case of the seventh embodiment as discussed above, the dynamic rigidity of the moving part 111 is improved, whereby the moving stability may also be improved.

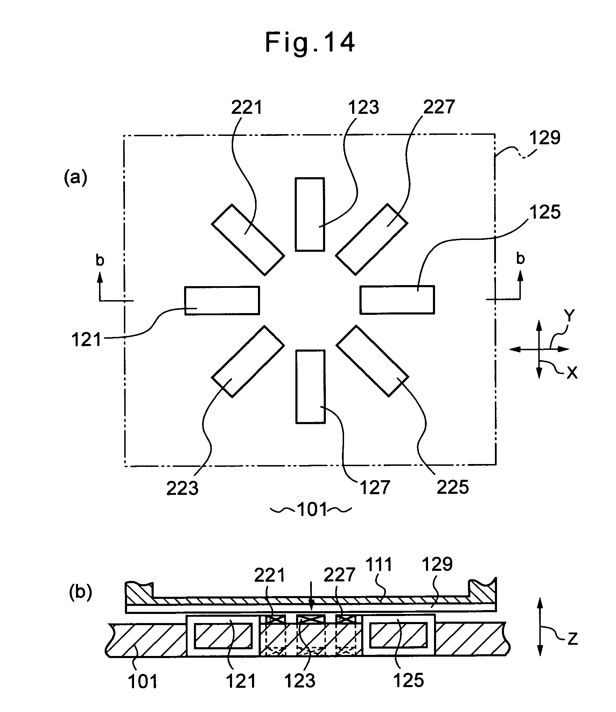

Now a ninth embodiment of the present invention will be explained with reference to Fig. 14. According to the ninth embodiment, with reference to the sixth embodiment, there are coils 221, 223, 225, 227 additionally arranged thereto. Even in the case of the sixth embodiment, when applying the electric current in the opposite the direction to the coils 121, 125, or when applying the electric current in the opposite direction to the coils 123, 127, it is possible to give rotative force to the moving part 111. However, according to the ninth embodiment, because of the additional coils 221, 223, 225, 227, and by appropriately controlling the direction of electric current of each coil, it is possible to rotate the moving part 111 more smoothly.

The present invention is not limited to the first through ninth embodiments as discussed above, and any modification or alteration may be done as long as it is not departing from the spirit of the present invention.

For example, according to the first through ninth embodiments, as an example of contact-free levitation method, the ultrasonic levitation method has been explained. However, it is also possible to apply other contact-free levitation methods, such as air method, magnetic method, etc.

Further, although the positioning accuracy may be deteriorated, it is of course possible to use contact guide for the driving unit of the present invention.

The other structures in the attached drawings are merely for illustrative purpose, and not limited to them.

### INDUSTRIAL APPLICABILITY

As above discussed, the driving unit according to the present invention has the structure in which neither another permanent magnet nor a high magnetic permeable material is arranged on the other side of the coil facing the permanent magnet, whereby the driving unit may have the smaller thickness and the longer stroke. Thus, the driving unit of the present invention is suitable for various driving units.

## Claims

1. A driving unit comprising:
a fixed part;
a moving part provided movably to said fixed part;
a permanent magnet mounted on either one of said fixed part and said moving part; and
a coil mounted on said the other one of said fixed part and said moving part and facing said permanent magnet,
**characterized in that** neither another permanent magnet nor a high magnetic permeable material is arranged on the other side of said coil facing said permanent magnet.

2. The driving unit as claimed in claim 1, further **characterized in that**:
said coil is wound in the direction parallel to a surface of said permanent magnet.

3. The driving unit as claimed in claim 1, further **characterized in that**:
said coil is wound in the direction perpendicular to a surface of said permanent magnet.

4. The driving unit as claimed in claim 3, further **characterized in that**:
a high magnetic permeable material is arranged in a hollow core of said coil.

5. The driving unit as claimed in claim 4, further **characterized in that**:
said high magnetic permeable material is arranged to be elongating in the moving direction of said moving part.

6. The driving unit as claimed in any one claim of claims 1 to 5, further **characterized in that**:
said moving part is guided against said fixed part by a contact-free guide mechanism.

7. The driving unit as claimed in claim 6, further **characterized in that**:
said contact-free guide mechanism is an ultrasonic levitation mechanism.

8. The driving unit as claimed in any one claim of claims 1 to 7, further **characterized in that**:
said coil is mounted on said fixed part.

9. The driving unit as claimed in any one claim of claims 1 to 8, further **characterized in that**:
said moving part moves in one direction against said fixed part.

10. The driving unit as claimed in any one claim of claims 1 to 8, further **characterized in that**:
said moving part or said fixed part is intermittently provided with a plurality of coils including non-parallel coil arrangement, and said moving part moves in the X axis - Y axis two dimensional directions against said fixed part.

11. The driving unit as claimed in any one claim of claims 1 to 8, further **characterized in that**:
said moving part or said fixed part is intermittently provided with a plurality of coils including non-parallel coil arrangement, and said moving part moves in the X axis - Y axis two dimensional directions, and also rotates, against said fixed part.
